# EUROPÄISCHE PATENTSCHRIFT

(11) **EP 3 309 528 B1**
(45) Veröffentlichungstag und Bekanntmachung des Hinweises auf die Patenterteilung: **22.05.2019**
(21) Anmeldenummer: 17191270.2
(22) Anmeldetag: 15.09.2017
(51) Int. Cl.: G01L 19/00, G01L 19/14

(54) **TUBUSDRUCKMITTLER**
TUBE DIAPHRAGM SEAL
TRANSMETTEUR DE PRESSION DE TUBULURE

(30) Priorität: 14.10.2016 DE 102016012275
(43) Veröffentlichungstag der Anmeldung: 18.04.2018
(73) Patentinhaber: WIKA Alexander Wiegand SE & Co. KG, 63911 Klingenberg/Main (DE)
(72) Erfinder: ZIPP, Joachim, 97903 Collenberg (DE); HENCH, Tobias, 63927 Bürgstadt (DE); HÖRNING, Udo, 63928 Eichenbühl (DE)
(74) Vertreter: Finger, Catrin

(56) Entgegenhaltungen:
- DE-A1- 19 949 831
- DE-T2- 68 915 411
- US-A1- 2003 200 812
- US-A1- 2014 298 914

## Beschreibung

### TECHNISCHES GEBIET

Die Erfindung betrifft einen Adapter für einen Druckmittler.

Die Erfindung betrifft weiterhin ein Messsystem und eine Anlage.

### STAND DER TECHNIK

Aus dem Stand der Technik ist es allgemein bekannt, mittels Messsystemen einen Druck, eine Temperatur und einen Füllstand eines innerhalb einer Anlage, beispielsweise einer Schaltanlage, befindlichen Messstoffes, d. h. eines zu analysierenden Mediums, zu ermitteln. Um einen direkten Kontakt eines Messgeräts mit dem Messstoff zu vermeiden, sind so genannte Druckmittler, beispielsweise Membran-Druckmittler, vorgesehen, welche ein Vordringen des Messstoffes zu dem Messgerät verhindern.

Ein solcher Membran-Druckmittler ist aus der DE 199 49 831 A1 bekannt. Der Membran-Druckmittler umfasst einen Grundkörper, eine im Grundkörper ausgebildete flache Ausnehmung, die von einer ringförmigen Fügefläche umgeben ist, und eine flache Membraneinheit, die mit ihrem Randbereich fluiddicht an der Fügefläche des Grundkörpers befestigt ist. Die Membraneinheit begrenzt zusammen mit einem Boden der Ausnehmung eine Flüssigkeitskammer, die im Betrieb mit einer Füllflüssigkeit gefüllt ist. Die Membraneinheit weist eine erste, der Flüssigkeitskammer zugewandte Membran und eine zweite Membran auf. Beide Membranen haben die gleiche Gestalt und sind parallel zueinander angeordnet. Im Grundkörper ist ein evakuierter Hohlraum ausgebildet, der in Strömungsverbindung mit einem zwischen den zwei Membranen ausgebildeten evakuierten Zwischenraum steht, wobei an dem Hohlraum eine Erfassungseinrichtung angeschlossen ist, mittels der eine Zustandsänderung in dem Hohlraum erfassbar ist.

Weiterhin ist aus der US 2003/0200812 A1 ein Fluiddrucksensor mit einem Gehäuse bekannt, welches eine erste Membran umfasst. Der Fluiddrucksensor umfasst weiterhin einen Wandler, der innerhalb des Gehäuses positioniert ist, und einen Körper, umfassend einen Fluideinlass und einen Fluidauslass, der entfernbar mit dem Gehäuse gekoppelt ist. Weiterhin umfasst der Fluiddrucksensor eine zweite Membran, die mit dem Körper versehen ist. Der Körper berührt einen Teil der ersten Membran, wenn der Körper mit dem Gehäuse verbunden ist, wobei die zweite Membran ein integrales Dichtungselement aufweist. Der Körper ist dabei als abnehmbare Kuppel ausgebildet, welche entfernbar an einem Gehäuse des Wandlers angeordnet ist, und eine Einlassfluidöffnung, eine Auslassfluidöffnung und eine Fluidkammer definiert.

Die DE 689 15 411 T2 beschreibt eine Vorrichtung zum Messen eines Drucks in einer Fluidleitung mit einer mit der Fluidleitung verbundenen Fluidkammer, einem ersten elastischen Druckübertragungsdiaphragma, welches eine Wand der Fluidkammer bildet, einem zweiten elastischen Druckübertragungsdiaphragma, das im Eingriff mit dem ersten Diaphragma angebracht ist, und einem mit dem zweiten Diaphragma gekoppelten Druckmesswertwandler, der auf Druckveränderungen anspricht, die durch das zweite Diaphragma übertragen werden. Dabei befinden sich das erste und das zweite elastische Druckdiaphragma in abdichtendem Eingriff und bilden eine zwischenliegende Vakuumkammer, wobei eine Einrichtung zur Verbindung einer Vakuumquelle mit der Vakuumkammer vorgesehen ist, um einen dauerhaften Kontakt des ersten und des zweiten Diaphragmas aufrecht zu erhalten.

Die US 2014/0298914 A1 beschreibt einen Drucksensor zu einer In-situ-Messung von Druck in einem Prozessfluid in einem Rohr oder einer Kammer. Der Drucksensor umfasst eine Druckübertragungsvorrichtung mit einer ersten Vorrichtung zum Abdichten einer Befestigung in einer Öffnung in einer Wand des Rohrs oder der Kammer. Die erste Vorrichtung umfasst eine erste Trennmembran zum Trennen zwischen dem Prozessfluid und einem druckübertragenden Fluid. Weiterhin ist eine zweite Vorrichtung zum Anbringen in einem Abstand von dem Rohr oder der Kammer vorgesehen, wobei die zweite Vorrichtung eine zweite Trennmembran und einen ersten Hohlraum, der das druckübertragende Fluid enthält, umfasst, wobei der erste Hohlraum ein Kapillarrohr für eine druckübertragende Verbindung zwischen der ersten Vorrichtung und der zweiten Vorrichtung umfasst. Der Drucksensor umfasst ferner einen äußeren Sensorteil mit einem Druckerfassungselement, wobei der äußere Sensorteil in einem Abstand von dem Rohr oder der Kammer angebracht ist und einen zweiten Hohlraum, der ein druckübertragendes Fluid in Druckverbindung mit dem Druckmesselement enthält. Zusätzlich umfasst der Drucksensor eine dritte Trennmembran, die die zweite Kavität begrenzt, wobei die dritte Trennmembran zur Druckübertragung mit der zweiten Trennmembran zur Druckübertragung zwischen der druckübertragenden Flüssigkeit in der Kavität und der druckübertragenden Flüssigkeit in der zweiten Kavität und einem die zweite umgebenden Volumen ausgebildet ist.

### AUFGABE DER ERFINDUNG

Es ist die Aufgabe der Erfindung, einen Adapter für einen Druckmittler, ein gegenüber dem Stand der Technik verbessertes Messsystem und eine verbesserte Anlage anzugeben.

### LÖSUNG

Hinsichtlich des Adapters wird die Aufgabe erfindungsgemäß durch die im Anspruch 1 angegebenen Merkmale, hinsichtlich des Messsystems durch die im Anspruch 2 angegebenen Merkmale und hinsichtlich der Anlage durch die im Anspruch 14 angegebenen Merkmale gelöst.

Vorteilhafte Ausgestaltungen der Erfindung sind Gegenstand der Unteransprüche.

Der erfindungsgemäße Adapter für einen Druckmittler umfasst einen ersten Koppelbereich zur fluiddichten Kopplung mit einem Prozessanschluss, einen zweiten Koppelbereich zur fluiddichten Kopplung mit einem Druckmittler und eine Adapter-Membran, welche fluiddicht an einem Übergang zwischen dem ersten Koppelbereich und dem zweiten Koppelbereich angeordnet ist und dazu ausgebildet ist, in einem montierten Zustand des Druckmittlers in Anlage mit einer Druckmittler-Membran zu kommen.

Der Adapter ermöglicht in einfacher und kostengünstiger Weise aufgrund der fluiddichten Kopplung mit dem Prozessanschluss die Möglichkeit, den Druckmittler zu demontieren und gleichzeitig den Prozess von der Umgebung abzuschotten und somit einen Kontakt mit der Umgebung, insbesondere einen Kontakt zur Außenluft, zu vermeiden.

Ferner wird die Durchführung einer Vorortkalibrierung eines Messsystems erlaubt, welches den Druckmittler umfasst.

Aufgrund des Anliegens der Adapter-Membran im montierten Zustand des Druckmittlers an der Druckmittler-Membran wird ein Doppelmembranaufbau ermöglicht, welcher ein gutes Druckübertragungsverhalten aufweist.

Weiterhin weist die Adapter-Membran einen wellenförmigen Querschnitt auf. Die beispielsweise sinusförmigen Wellen ermöglichen einen geringen Temperaturfehler bei geringem Herstellungsaufwand. Derartige Membranen können mit nahezu allen Membranmaterialien, -dicken und -durchmessern hergestellt werden.

Das erfindungsgemäße Messsystem zur Messung eines Drucks, eines Füllstands und/oder einer Temperatur eines Messstoffes innerhalb einer Anlage umfasst einen zuvor beschriebenen Adapter und einen Druckmittler, wobei der Druckmittler in dem zweiten Koppelbereich des Adapters fluiddicht mit diesem gekoppelt ist.

Das Messsystem ermöglicht in einfacher und kostengünstiger Weise aufgrund der fluiddichten Kopplung des Adapters mit dem Prozessanschluss die Möglichkeit, den Druckmittler zu demontieren und gleichzeitig den Prozess von der Umgebung abzuschotten und somit einen Kontakt mit der Umgebung, insbesondere einen Kontakt zur Außenluft, zu vermeiden. Ferner wird dadurch eine Vorortkalibrierung des Messsystems ermöglicht.

Aufgrund des Anliegens der Adapter-Membran im montierten Zustand des Druckmittlers an der Druckmittler-Membran wird ein Doppelmembranaufbau ermöglicht, welcher ein gutes Druckübertragungsverhalten aufweist.

In einer möglichen Ausgestaltung des Messsystems ist der Druckmittler mit zumindest einem Messgerät gekoppelt oder Bestandteil eines Messgeräts, wobei innerhalb des Druckmittlers ein Übertragungskanal ausgebildet ist, welcher an seinem ersten Ende von der Druckmittler-Membran und an seinem zweiten Ende von einem Erfassungsbereich des Messgeräts begrenzt ist. Dieser Aufbau ermöglicht eine einfache und zuverlässige Messwerterfassung.

Um eine Bewegung der Druckmittler-Membran und der an dieser anliegenden Adapter-Membran zu optimieren, schließt sich an ein erstes der Druckmittler-Membran zugewandtes Ende des Übertragungskanals ein Bewegungsraum zur Bewegung der Druckmittler-Membran an.

Dabei sind der Übertragungskanal und der Bewegungsraum beispielsweise mit einer Druckmittler-Flüssigkeit gefüllt, welche eine gute Übertragung von mittels der Membranen durch Druckänderungen erzeugten Bewegungen auf das Messgerät ermöglicht.

Gemäß einer weiteren möglichen Ausgestaltung des Messsystems weisen die Druckmittler-Membran und die Adapter-Membran einen deckungsgleichen wellenförmigen Querschnitt auf. Selbstverständlich sind auch alle anderen Formen von Querschnitten einer Membran möglich, zum Beispiel auch stufenförmige oder dreiecksförmige oder frei profilierte Membranen. Aufgrund der Deckungsgleichheit wird das Druckübertragungsverhalten des Doppelmembranaufbaus weiter verbessert.

In einer möglichen Weiterbildung des Messsystems weisen bzw. weist der Adapter und/oder der Druckmittler einen Unterdruckanschluss zur Evakuierung eines zwischen dem Adapter und dem Druckmittler im montierten Zustand ausgebildeten Zwischenraums auf. Durch diese Evakuierung ist es in einfacher Weise möglich, die Adapter-Membran und die Druckmittler-Membran deckend in Anlage zueinander zu bringen.

Zu einer Überwachung des zur Evakuierung erzeugten Unterdrucks ist beispielsweise ein Messgerät mit dem Unterdruckanschluss gekoppelt. Die Überwachung der Evakuierung ermöglicht eine Überprüfung einer Richtigkeit einer Funktionsweise des Messsystems und eine eventuelle "Nachevakuierung".

In einer möglichen Ausgestaltung des Messsystems ist mit dem Unterdruckanschluss ein Ventil gekoppelt. Mittels des Ventils ist es einerseits möglich, die Evakuierung durchzuführen und den evakuierten Bereich abzudichten. Andererseits ermöglicht das Ventil in einfacher Weise durch Öffnen desselben, die Evakuierung und den damit verbundenen Unterdruck aufzuheben und somit die Demontage des Druckmittlers durchzuführen.

Gemäß einer weiteren möglichen Ausgestaltung sind der Druckmittler und der Adapter zumindest abschnittsweise im Wesentlichen zylindrisch ausgebildet, wobei der zylindrische Abschnitt des Druckmittlers einseitig von der Druckmittler-Membran begrenzt ist und der zylindrische Abschnitt des Adapters einseitig von der Adapter-Membran begrenzt ist, wobei der Druckmittler mit seinem zylindrischen Abschnitt mit der Druckmittler-Membran voran in den zylindrischen Abschnitt des Adapters hineinragt. Durch diese Passung des Druckmittlers im Adapter kann besonders einfach sichergestellt werden, dass die Adapter-Membran und die Druckmittler-Membran vor der Evakuierung deckungsgleich übereinander angeordnet sind.

Um eine Bewegung des zylindrischen Druckmittlers in radialer Richtung innerhalb des Adapters zu minimieren oder zu vermeiden, sind ein Außendurchmesser des im Wesentlichen zylindrischen Abschnitts des Druckmittlers und ein Innendurchmesser des im Wesentlichen zylindrischen Abschnitts derart ausgebildet, dass der Druckmittler ohne merkliches Spiel innerhalb des Adapters beweglich ist. Beispielsweise ist die verwendete Passung eine Spielpassung "H7/g6" oder "H7/h6" gemäß DIN 7157 (DIN = Deutsches Institut für Normung).

Für eine sichere Befestigung des Druckmittlers am Adapter ist gemäß einer Weiterbildung des Messsystems vorgesehen, dass der Adapter ein Innengewinde oder ein Außengewinde und der Druckmittler ein dazu korrespondierendes Außengewinde oder Innengewinde aufweist, der Adapter und der Druckmittler Befestigungsstrukturen zur Befestigung zumindest einer Klammer oder eines Klemmringes und/oder miteinander korrespondierende Bohrungen und/oder Gewinde für eine Schraubverbindung umfassen.

In einer möglichen Ausgestaltung des Messsystems weisen bzw. weist der Adapter und/oder der Druckmittler einen Außendurchmesser von 30 mm bis 80 mm, 40 mm bis 70 mm, insbesondere 45 mm oder 55 mm, auf. Bei diesen Abmessungen weisen die Adapter-Membran und die Druckmittler-Membran, d. h. der Doppelmembranaufbau, ein besonders gutes Übertragungsverhalten auf. Gleichzeitig kann bei diesen Abmessungen ein relativ geringes Arbeitsvolumen des Messsystems realisiert werden, wobei aufgrund des besonders guten Übertragungsverhaltens des Doppelmembranaufbaus und des geringen Arbeitsvolumens ein zuverlässiger Betrieb des Messsystems mit einem besonders schnellen Ansprechverhalten und einer besonders guten Temperaturempfindlichkeit sichergestellt wird.

Die erfindungsgemäße Anlage umfasst einen Prozessraum, in welchem sich ein Messstoff befindet, einen mit dem Prozessraum gekoppelten Prozessanschluss und ein mit dem Prozessanschluss gekoppeltes Messsystem gemäß der vorherigen Beschreibung.

In einer möglichen Weiterbildung der Anlage ist die Adapter-Membran in einer Flucht mit einer den Prozessraum begrenzenden Wandung angeordnet. Mit anderen Worten: Das Messsystem ist derart an der Anlage montiert, dass der Doppelmembranaufbau und somit der Adapter und der Druckmittler frontbündig mit der den Prozessraum begrenzenden Wandung angeordnet sind. Hierdurch wird insbesondere erreicht, dass der Prozessraum nicht durch das Messsystem beeinträchtigt wird, woraus eine zuverlässige und sehr exakte Messwerterfassung resultiert. Gleichzeitig kann eine einfache Reinigung des Prozessraums sichergestellt werden.

Für eine sichere Befestigung des Messsystems an der Anlage ist gemäß einer Weiterbildung der Anlage vorgesehen, dass der Adapter ein Innengewinde oder ein Außengewinde und der Druckmittler ein dazu korrespondierendes Außengewinde oder Innengewinde aufweist, dass der Prozessanschluss der ein Innengewinde oder ein Außengewinde und der Adapter ein dazu korrespondierendes Außengewinde oder Innengewinde aufweist, dass der Adapter und der Druckmittler sowie der Adapter und der Prozessanschluss Befestigungsstrukturen zur Befestigung zumindest einer Klammer oder eines Klemmringes und/oder miteinander korrespondierende Bohrungen und/oder Gewinde für eine Schraubverbindung umfassen.

### BESCHREIBUNG DER ZEICHNUNGEN

Ausführungsbeispiele der Erfindung werden im Folgenden anhand von Zeichnungen näher erläutert.

Dabei zeigen:
- Figur 1: schematisch eine Schnittzeichnung eines Ausschnitts einer Anlage mit einem ersten Ausführungsbeispiel eines Messsystems als Explosionsdarstellung,
- Figur 2: schematisch eine Schnittzeichnung eines Ausschnitts einer Anlage mit einem zweiten Ausführungsbeispiel eines Messsystems als Explosionsdarstellung.

Einander entsprechende Teile sind in allen Figuren mit den gleichen Bezugszeichen versehen.

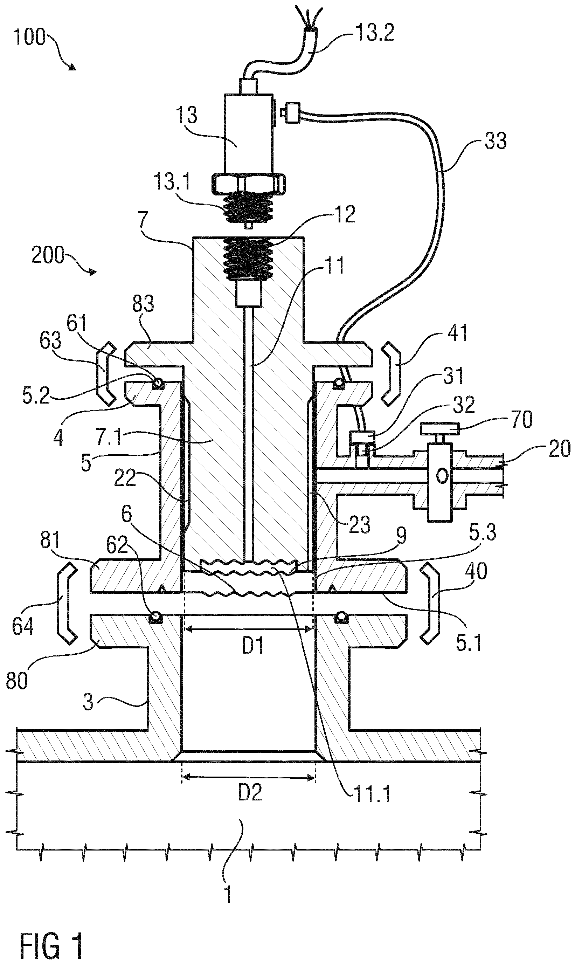

In Figur 1 ist eine Schnittzeichnung eines Ausschnitts einer Anlage 100 mit einem möglichen ersten Ausführungsbeispiel eines erfindungsgemäßen Messsystems 200 als Explosionsdarstellung gezeigt.

Das Messsystem 200 ist zu einer Erfassung eines Drucks, einer Temperatur und/oder eines Füllstands eines nicht gezeigten Messstoffes in einem Prozessraum 1 der Anlage 100 vorgesehen.

Hierzu umfasst das Messsystem 200 ein Messgerät 13, einen Druckmittler 7 und einen Adapter 5, welcher zwischen einem mit dem Prozessraum 1 gekoppelten Prozessanschluss 3 und dem Druckmittler 7 angeordnet ist.

Der Adapter 5 umfasst einen ersten Koppelbereich 5.1 zur fluiddichten Kopplung mit dem Prozessanschluss 3. An einer diesem ersten Koppelbereich 5.1 zugewandten Fläche des Prozessanschlusses 3 ist eine umlaufende Dichtung 62, insbesondere ein O-Ring, zur Abdichtung angeordnet.

Eine Befestigung des Adapters 5 am Prozessanschluss 3 erfolgt im dargestellten Ausführungsbeispiel mittels eines Klemmverschlusses, auch als Clamp-Verbindung oder Clamp-Verschraubung bezeichnet. Hierzu weisen sowohl der Prozessanschluss 3 als auch der Adapter 5 als Befestigungsstrukturen 80, 81 jeweils einen Flansch auf, welche mittels einer diese umgebenden einteiligen oder zweiteiligen Klammer 40, 64 oder in nicht gezeigter Weise mittels eines Klemmrings miteinander dichtend verklemmt sind.

Ferner umfasst der Adapter 5 einen zweiten Koppelbereich 5.2 zur fluiddichten Kopplung mit dem Druckmittler 7, wobei an einer dem Druckmittler 7 zugewandten Fläche des zweiten Koppelbereichs 5.2 eine umlaufende Dichtung 61, insbesondere ein O-Ring, zur Abdichtung angeordnet ist.

Zusätzlich umfasst der Adapter 5 eine Adapter-Membran 6, welche fluiddicht an einem Übergang zwischen dem ersten Koppelbereich 5.1 und dem zweiten Koppelbereich 5.2 angeordnet ist und dazu ausgebildet ist, in einem montierten Zustand des Druckmittlers 7 in Anlage mit einer Druckmittler-Membran 9 zu kommen.

Dabei sind der Druckmittler 7 und der Adapter 5 zumindest abschnittsweise im Wesentlichen zylindrisch ausgebildet, wobei ein zylindrischer Abschnitt 7.1 des Druckmittlers 7 einseitig von der Druckmittler-Membran 9 begrenzt ist und ein zylindrischer Abschnitt 5.3 des Adapters 5 einseitig von der Adapter-Membran 6 begrenzt ist. Hierbei ragt der Druckmittler 7 mit seinem zylindrischen Abschnitt 7.1 mit der Druckmittler-Membran 9 voran in den zylindrischen Abschnitt 5.3 des Adapters 5 hinein.

Ein Außendurchmesser D1 des Druckmittlers 7 und ein Innendurchmesser D2 des Adapters 5 sind insbesondere derart ausgebildet, dass die im Wesentlichen zylindrischen Abschnitte 7.1, 5.3 zumindest ohne merkliches Spiel beweglich sind. Das heißt, der Druckmittler 7 ist mit einer zumindest abschnittsweisen Passung ohne merkliches Spiel in den Adapter 5 eingesetzt.

Eine Befestigung des Druckmittlers 7 am Adapter 5 erfolgt im dargestellten Ausführungsbeispiel mittels eines Klemmverschlusses, auch als Clamp-Verbindung oder Clamp-Verschraubung bezeichnet. Hierzu weisen sowohl der Druckmittler 7 als auch der Adapter 5 als Befestigungsstrukturen 83, 4 jeweils einen Flansch auf, welche mittels einer diese umgebenden einteiligen oder zweiteiligen Klammer 41, 63 oder in nicht gezeigter Weise mittels eines Klemmrings miteinander dichtend verklemmt sind.

Zur Erzeugung der Anlage der Adapter-Membran 6 an der Druckmittler-Membran 9 wird eine Evakuierung eines zwischen dem Adapter 5 und dem Druckmittler 7 im montierten Zustand ausgebildeten Zwischenraums durchgeführt. Zu dieser Evakuierung umfasst der Adapter 5 einen Unterdruckanschluss 20.

An dem Unterdruckanschluss 20 ist ein Sensor 32 zur Erfassung eines Drucks innerhalb des Unterdruckanschlusses 20 mittels einer Verschraubung 31 gekoppelt, welcher über eine Datenleitung 33 mit dem Messgerät 13 zur Überwachung des Unterdrucks gekoppelt ist.

Ferner ist mit dem Unterdruckanschluss 20 ein Ventil 70 gekoppelt.

Zur Erzeugung des Unterdrucks an der Adapter-Membran 6 und der Druckmittler-Membran 9 sind am äußeren Umfang des Druckmittlers 7 Aussparungen 22, 23 eingebracht, wobei die Aussparung 23 als Nut bis zum Bereich der Adapter-Membran 6 und der Druckmittler-Membran 9 führt.

Dabei wird zur Erzeugung des Unterdrucks das Ventil 70 geöffnet und der Zwischenraum zwischen Adapter 5 und Druckmittler 7 wird evakuiert. Hierdurch kommt die Adapter-Membran 6 zur Anlage an der Druckmittler-Membran 9, wobei beide Membranen einen deckungsgleichen wellenförmigen Querschnitt aufweisen.

Aufgrund des Anliegens der Adapter-Membran 6 an der Druckmittler-Membran 9 wird ein Doppelmembranaufbau erzeugt, welcher ein gutes Druckübertragungsverhalten aufweist. Zur Übertragung des Drucks des Messstoffes im Prozessraum 1 an das Messgerät 13, welche mittels eines Außengewindes 13.1 an einem als korrespondierendes Innengewinde ausgebildeten Messanschluss 12 mit dem Druckmittler 7 gekoppelt ist, ist zwischen dem Doppelmembranaufbau und dem Messgerät 13 innerhalb des Druckmittlers 7 ein Übertragungskanal 11 ausgebildet, welcher insbesondere mit einer nicht gezeigten Druckmittler-Flüssigkeit gefüllt ist. An einem unteren, dem Doppelmembranaufbau zugewandten Ende des Übertragungskanals 11 mündet dieser in einen Bewegungsraum 11.1 zur Bewegung des Doppelmembranaufbaus und somit der Druckmittler-Membran 9.

In Abhängigkeit des innerhalb des Prozessraums 1 vorherrschenden Drucks des Messstoffes bewegt sich der Doppelmembranaufbau durch Anliegen der und somit der Druckmittler-Membran 9 der Adapter-Membran 6 an der Druckmittler-Membran 9, wobei die in dem Übertragungskanal 11 und dem Bewegungsraum 11.1 vorhandene Druckmittler-Flüssigkeit diese Bewegungen auf das Messgerät 13 überträgt.

Das Messgerät 13 umfasst im dargestellten Ausführungsbeispiel eine Datenleitung 13.2 zur Übertragung von Messdaten an eine Auswertung und/oder eine Anzeigeeinheit. Alternativ können die Auswertung und Anzeige auch integraler Bestandteil des Messgeräts 13 sein.

Zu einer Demontage des Druckmittlers 7, beispielsweise für eine Vorortkalibrierung oder einen Wechsel desselben, wird zunächst durch Öffnen des Ventils 70 und/oder durch Öffnen der Verschraubung 31 der Unterdruck ausgeglichen. Anschließend kann durch Öffnen der Klammern 41, 63 der Druckmittler 7 vom Adapter 5 demontiert werden. Der Adapter 5 bleibt weiterhin fluiddicht am Prozessanschluss 3 befestigt und schottet somit den Prozessraum 1 von dessen Umgebung ab und schützt diesen somit vor einem Kontakt mit der Umgebung, insbesondere einem Kontakt mit Außenluft.

Das Messgerät 13, welches mittels des Außengewindes 13.1 an das korrespondierende Innengewinde des Messanschlusses 12 angebaut ist, kann selbstverständlich auch mittels Schweißung oder Aufstecken oder mittels Klebung mit dem Druckmittler verbunden sein. Die Verbindung kann des Weiteren auch über eine Kapillare realisiert sein.

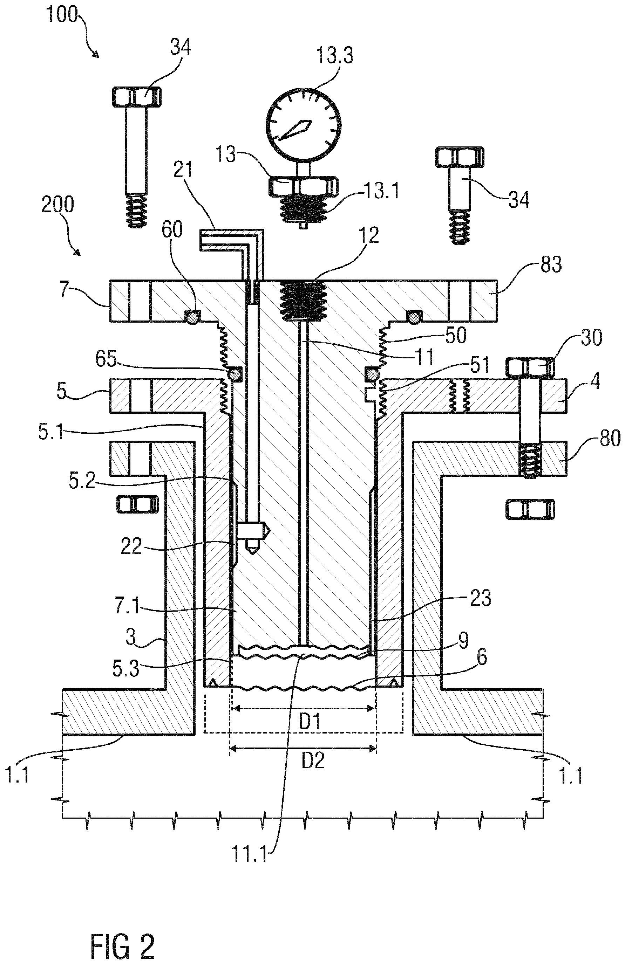

Figur 2 zeigt eine Schnittzeichnung eines Ausschnitts einer Anlage 100 mit einem möglichen zweiten Ausführungsbeispiel des erfindungsgemäßen Messsystems 200 als Explosionsdarstellung.

Im Unterschied zu dem in Figur 1 dargestellten ersten Ausführungsbeispiel des Messsystems 200 umfasst dieses ein als Druckmanometer ausgebildetes Messgerät 13, welches eine Anzeigeeinheit 13.3 zur Anzeige der Messwerte umfasst.

Weiterhin unterscheidet sich das zweite Ausführungsbeispiel des Messsystems 200 vom ersten Ausführungsbeispiel dadurch, dass der Prozessanschluss 3, der Adapter 5 und der Druckmittler 7 derart ausgebildet sind, dass die Adapter-Membran 6 bzw. der Doppelmembranaufbau in einer Flucht mit einer den Prozessraum begrenzenden Wandung 1.1 angeordnet ist. Mit anderen Worten: Das Messsystem 200 ist derart an der Anlage 100 montiert, dass der Doppelmembranaufbau und somit der Adapter 5 und der Druckmittler 7 frontbündig mit der den Prozessraum 1 begrenzenden Wandung 1.1 angeordnet sind.

Ein weiter Unterschied besteht darin, dass ein Unterdruckanschluss 21 Bestandteil des Druckmittlers 7 ist. Auch der Unterdruckanschluss 21 kann in nicht näher dargestellter Weise mit einem Sensor 32 zur Erfassung des Drucks innerhalb des Unterdruckanschlusses 21 gekoppelt sein, welcher über eine Datenleitung 33 mit dem Messgerät 13 oder einem anderen Messgerät zur Überwachung des Unterdrucks gekoppelt ist. Ferner kann mit dem Unterdruckanschluss 21 ein Ventil 70 gekoppelt sein.

Ein weiterer Unterschied besteht darin, dass zu einer Befestigung des Druckmittlers 7 am Adapter 5 der Adapter 5 ein Innengewinde 51 und der Druckmittler 7 ein dazu korrespondierendes Außengewinde 50 aufweist. Zur Abdichtung des Druckmittlers 7 am Adapter 5 sind am Druckmittler 7 zwei als O-Ringe ausgebildete Dichtungen 60, 65 angeordnet.

Ferner umfassen der Druckmittler 7, der Adapter 5 und der Prozessanschluss 3 zu einer Befestigung des Druckmittlers 7 am Adapter 5 und zur Befestigung des Adapters 5 am Prozessanschluss jeweils als Flansche ausgebildete Befestigungsstrukturen 83, 4, 80, in welche miteinander korrespondierende Bohrungen und Gewinde zur Erzeugung von Schraubverbindungen 30, 34 eingebracht sind.

Zu einer Demontage des Druckmittlers 7, beispielsweise für eine Vorortkalibrierung oder einen Wechsel desselben, wird zunächst durch Öffnen des nicht gezeigten Ventils 70 der Unterdruck ausgeglichen. Anschließend kann durch Öffnen der Schraubverbindungen 34 der Druckmittler 7 vom Adapter 5 demontiert werden. Der Adapter 5 bleibt weiterhin mittels der Schraubverbindung 30 am Prozessanschluss 3 befestigt und schottet somit den Prozessraum 1 von dessen Umgebung ab und schützt diesen somit vor einem Kontakt mit der Umgebung, insbesondere einem Kontakt mit Außenluft.

Die Erfindung ist nicht auf die vorhergehenden ausführlichen Ausführungsbeispiele beschränkt. Sie kann in dem Umfang der nachfolgenden Ansprüche modifiziert werden. Ebenfalls können einzelne Aspekte aus den Unteransprüchen miteinander kombiniert werden.

### BEZUGSZEICHENLISTE

- 1: Prozessraum
- 1.1: Wandung

- 3: Prozessanschluss
- 4: Befestigungsstruktur
- 5: Adapter
- 5.1: Koppelbereich
- 5.2: Koppelbereich
- 5.3: zylindrischer Abschnitt
- 6: Adapter-Membran
- 7: Druckmittler
- 7.1: zylindrischer Abschnitt

- 9: Druckmittler-Membran

- 11: Übertragungskanal
- 11.1: Bewegungsraum
- 12: Messanschluss
- 13: Messgerät
- 13.1: Außengewinde
- 13.2: Datenleitung
- 13.3: Anzeigeeinheit

- 20: Unterdruckanschluss
- 21: Unterdruckanschluss
- 22: Aussparung
- 23: Aussparung

- 30: Schraubverbindung
- 31: Verschraubung
- 32: Sensor
- 33: Datenleitung
- 34: Schraubverbindung
- 40: Klammer
- 41: Klammer

- 50: Außengewinde
- 51: Innengewinde

- 60: Dichtung
- 61: Dichtung
- 62: Dichtung
- 63: Klammer
- 64: Klammer
- 65: Dichtung

- 70: Ventil

- 80: Befestigungsstruktur
- 81: Befestigungsstruktur

- 83: Befestigungsstruktur

- 100: Anlage

- 200: Messsystem

- D1: Außendurchmesser
- D2: Innendurchmesser

## Patentansprüche

1. Adapter (5) für einen Druckmittler (7) mit
- einem ersten Koppelbereich (5.1) zur fluiddichten Kopplung mit einem Prozessanschluss (3),
- einem zweiten Koppelbereich (5.2) zur fluiddichten Kopplung mit einem Druckmittler (7) und
- einer Adapter-Membran (6), welche fluiddicht an einem Übergang zwischen dem ersten Koppelbereich (5.1) und dem zweiten Koppelbereich (5.2) angeordnet ist, einen wellenförmigen Querschnitt aufweist und dazu ausgebildet ist, in einem montierten Zustand des Druckmittlers (7) in Anlage mit einer Druckmittler-Membran (9) zu kommen.

2. Messsystem (200) zur Messung eines Drucks, eines Füllstands und/oder einer Temperatur eines Messstoffes innerhalb einer Anlage (100) mit
- einem Adapter (5) gemäß Anspruch 1 und
- einem Druckmittler (7), wobei
- der Druckmittler (7) in dem zweiten Koppelbereich (5.2) des Adapters (5) fluiddicht mit diesem gekoppelt ist.

3. Messsystem (200) nach Anspruch 2,
**dadurch gekennzeichnet, dass**
- zumindest ein Messgerät (13) vorgesehen ist,
- der Druckmittler (7) mit dem zumindest einen Messgerät (13) gekoppelt ist oder Bestandteil des Messgeräts (13) ist,
- wobei innerhalb des Druckmittlers (7) ein Übertragungskanal (11) ausgebildet ist, welcher an seinem ersten Ende von der Druckmittler-Membran (9) und an seinem zweiten Ende von einem Erfassungsbereich des Messgeräts (13) begrenzt ist.

4. Messsystem (200) nach Anspruch 3,
**dadurch gekennzeichnet, dass** sich an ein erstes der Druckmittler-Membran (9) zugewandtes Ende des Übertragungskanals (11) ein Bewegungsraum (11.1) zur Bewegung der Druckmittler-Membran (9) anschließt.

5. Messsystem (200) nach Anspruch 4,
**dadurch gekennzeichnet, dass** der Übertragungskanal (11) und der Bewegungsraum (11.1) mit einer Druckmittler-Flüssigkeit gefüllt sind.

6. Messsystem (200) nach einem der Ansprüche 2 bis 5, **dadurch gekennzeichnet, dass** die Druckmittler-Membran (9) und die Adapter-Membran (6) einen deckungsgleichen wellenförmigen Querschnitt aufweisen.

7. Messsystem (200) nach einem der Ansprüche 2 bis 6, **dadurch gekennzeichnet, dass** der Adapter (5) und/oder der Druckmittler (7) einen Unterdruckanschluss (20, 21) zur Evakuierung eines zwischen dem Adapter (5) und dem Druckmittler (7) im montierten Zustand ausgebildeten Zwischenraums aufweisen bzw. aufweist.

8. Messsystem (200) nach Anspruch 7,
**dadurch gekennzeichnet, dass** ein Messgerät (13) vorgesehen ist, welches mit dem Unterdruckanschluss (20, 21) zur Überwachung des Unterdrucks gekoppelt ist.

9. Messsystem (200) nach Anspruch 7 oder 8,
**dadurch gekennzeichnet, dass** ein Ventil (70) vorgesehen ist, welches mit dem Unterdruckanschluss (11) gekoppelt ist.

10. Messsystem (200) nach einem der Ansprüche 2 bis 9,
**dadurch gekennzeichnet, dass**
- der Druckmittler (7) und der Adapter (5) zumindest abschnittsweise im Wesentlichen zylindrisch ausgebildet sind, wobei
- der zylindrische Abschnitt (7.1) des Druckmittlers (7) einseitig von der Druckmittler-Membran (9) begrenzt ist und
- der zylindrische Abschnitt (5.3) des Adapters (5) einseitig von der Adapter-Membran (6) begrenzt ist,
- wobei der Druckmittler (7) mit seinem zylindrischen Abschnitt (7.1) mit der Druckmittler-Membran (9) voran in den zylindrischen Abschnitt (5.3) des Adapters (5) hineinragt.

11. Messsystem (200) nach Anspruch 10,
**dadurch gekennzeichnet, dass** ein Außendurchmesser (D1) des im Wesentlichen zylindrischen Abschnitts (7.1) des Druckmittlers (7) und ein Innendurchmesser (D2) des im Wesentlichen zylindrischen Abschnitts (5.3) des Adapters (5) derart ausgebildet sind, dass der Druckmittler (7) ohne merkliches Spiel innerhalb des Adapters (5) beweglich ist.

12. Messsystem (200) nach einem der Ansprüche 2 bis 11,
**dadurch gekennzeichnet, dass** zu einer Befestigung des Druckmittlers (7) am Adapter (5)
- der Adapter (5) ein Innengewinde (51) oder ein Außengewinde und der Druckmittler (7) ein dazu korrespondierendes Außengewinde (50) oder Innengewinde aufweist,
- der Adapter (5) und der Druckmittler (7) Befestigungsstrukturen (4, 80, 81, 83) zur Befestigung zumindest einer Klammer (40, 41, 63, 64) oder eines Klemmringes und/oder
- miteinander korrespondierende Bohrungen und/oder Gewinde für eine Schraubverbindung (30, 34) umfassen.

13. Messsystem (200) nach einem der Ansprüche 10 bis 12, **dadurch gekennzeichnet, dass** ein Außendurchmesser (D1) des im Wesentlichen zylindrischen Abschnitts (7.1) des Druckmittlers (7) und/oder ein Innendurchmesser (D2) des im Wesentlichen zylindrischen Abschnitts (5.3) des Adapters (5) 30 mm bis 80 mm, 40 mm bis 70 mm, insbesondere 45 mm oder 55 mm, betragen bzw. beträgt.

14. Anlage (100), umfassend
- einen Prozessraum (1), in welchem sich ein Messstoff befindet,
- einen mit dem Prozessraum (1) gekoppelten Prozessanschluss (3) und
- ein mit dem Prozessanschluss (3) gekoppeltes Messsystem (200) nach einem der Ansprüche 2 bis 13.

15. Anlage (100) nach Anspruch 14,
**dadurch gekennzeichnet, dass** die Adapter-Membran (6) in einer Flucht mit einer den Prozessraum (1) begrenzenden Wandung (1.1) angeordnet ist.

## Claims

1. Adapter (5) for a diaphragm seal (7), having
- a first coupling region (5.1) for fluid-tight coupling to a process connection (3),
- a second coupling region (5.2) for fluid-tight coupling to a diaphragm seal (7), and
- an adapter membrane (6), which is arranged in a fluid-tight manner at a transition between the first coupling region (5.1) and the second coupling region (5.2), has an undulating cross section and is designed to come into abutment with a diaphragm-seal membrane (9) when the diaphragm seal (7) is in an installed state.

2. Measuring system (200) for measuring a pressure, a filling level and/or a temperature of a process medium within an installation (100), having
- an adapter (5) according to Claim 1, and
- a diaphragm seal (7), wherein
- the diaphragm seal (7) is coupled to the adapter (5) in a fluid-tight manner in the second coupling region (5.2) of said adapter.

3. Measuring system (200) according to Claim 2,
**characterized in that**
- at least one measuring instrument (13) is provided,
- the diaphragm seal (7) is coupled to the at least one measuring instrument (13) or is a constituent part of the measuring instrument (13),
- wherein a transmission channel (11) is formed within the diaphragm seal (7) and, at its first end, is bounded by the diaphragm-seal membrane (9) and, at its second end, is bounded by a detecting region of the measuring instrument (13).

4. Measuring system (200) according to Claim 3,
**characterized in that** a movement space (11.1) for moving the diaphragm-seal membrane (9) adjoins a first end of the transmission channel (11), said first end being directed towards the diaphragm-seal membrane (9).

5. Measuring system (200) according to Claim 4,
**characterized in** the transmission channel (11) and the movement space (11.1) are filled with a diaphragm-seal liquid.

6. Measuring system (200) according to one of Claims 2 to 5,
**characterized in** the diaphragm-seal membrane (9) and the adapter membrane (6) have a congruent undulating cross section.

7. Measuring system (200) according to one of Claims 2 to 6,
**characterized in** the adapter (5) and/or the diaphragm seal (7) have/has a vacuum connection (20, 21) for evacuating an interspace which is formed between the adapter (5) and the diaphragm seal (7) in the installed state.

8. Measuring system (200) according to Claim 7,
**characterized by** the provision of a measuring instrument (13) which is coupled to the vacuum connection (20, 21) for vacuum-monitoring purposes.

9. Measuring system (200) according to Claim 7 or 8,
**characterized by** the provision of a valve (70) which is coupled to the vacuum connection (11).

10. Measuring system (200) according to one of Claims 2 to 9,
**characterized in that**
- the diaphragm seal (7) and the adapter (5) are of essentially cylindrical design at least in part, wherein
- the cylindrical portion (7.1) of the diaphragm seal (7) is bounded at one end by the diaphragm-seal membrane (9), and
- the cylindrical portion (5.3) of the adapter (5) is bounded at one end by the adapter membrane (6),
- wherein the diaphragm seal (7) with its cylindrical portion (7.1) having the diaphragm-seal membrane (9) ahead projects into the cylindrical portion (5.3) of the adapter (5).

11. Measuring system (200) according to Claim 10,
**characterized in that** an external diameter (D1) of the essentially cylindrical portion (7.1) of the diaphragm seal (7) and an internal diameter (D2) of the essentially cylindrical portion (5.3) of the adapter (5) are designed such that the diaphragm seal (7) is moveable within the adapter (5) without any significant amount of play.

12. Measuring system (200) according to one of Claims 2 to 11,
**characterized in that**, for the purpose of fastening the diaphragm seal (7) on the adapter (5),
- the adapter (5) has an internal thread (51) or an external thread and the diaphragm seal (7) has a corresponding external thread (50) or internal thread,
- the adapter (5) and the diaphragm seal (7) comprise fastening structures (4, 80, 81, 83) for fastening at least one clip (40, 41, 63, 64) or a clamping ring, and/or
- comprise corresponding bores and/or threads for a screw connection (30, 34).

13. Measuring system (200) according to one of Claims 10 to 12,
**characterized in that** an external diameter (D1) of the essentially cylindrical portion (7.1) of the diaphragm seal (7) and/or an internal diameter (D2) of the essentially cylindrical portion (5.3) of the adapter (5) are/is 30 mm to 80 mm, 40 mm to 70 mm, in particular 45 mm or 55 mm.

14. Installation (100) comprising
- a process space (1), in which a process medium is located,
- a process connection (3), which is coupled to the process space (1), and
- a measuring system (200) according to one of Claims 2 to 13, said measuring system being coupled to the process connection (3).

15. Installation (100) according to Claim 14,
**characterized in that** the adapter membrane (6) is arranged in alignment with a wall (1.1) which bounds the process space (1).

## Revendications

1. Adaptateur (5) pour un transmetteur de pression (7) avec
- une première région de couplage (5.1) pour le couplage étanche au fluide avec un raccord de traitement (3),
- une seconde région de couplage (5.2) pour le couplage étanche au fluide avec un transmetteur de pression (7), et
- une membrane d'adaptateur (6), qui est disposée de façon étanche au fluide à une transition entre la première région de couplage (5.1) et la seconde région de couplage (5.2), présente une section transversale ondulée et est configurée pour venir, dans un état monté du transmetteur de pression (7), en appui avec une membrane de transmetteur de pression (9).

2. Système de mesure (200) pour la mesure d'une pression, d'un niveau de remplissage et/ou d'une température d'une substance à mesurer à l'intérieur d'une installation (100) avec
- un adaptateur (5) selon la revendication 1 et
- un transmetteur de pression (7), dans lequel
- le transmetteur de pression (7) est couplé de façon étanche à l'adaptateur (5) dans la seconde région de couplage (5.2) de celui-ci.

3. Système de mesure (200) selon la revendication 2, **caractérisé en ce que**
- il est prévu au moins un appareil de mesure (13),
- le transmetteur de pression (7) est couplé audit au moins un appareil de mesure (13) ou est un composant de l'appareil de mesure (13),
- dans lequel un canal de transmission (11) est formé à l'intérieur du transmetteur de pression (7), et est limité à sa première extrémité par la membrane de transmetteur de pression (9) et à sa seconde extrémité par une région de détection de l'appareil de mesure (13).

4. Système de mesure (200) selon la revendication 3, **caractérisé en ce qu'**une chambre de mobilité (11.1) se raccorde à une première extrémité du canal de transmission (11) tournée vers la membrane de transmetteur de pression (9) pour le mouvement de la membrane de transmetteur de pression (9).

5. Système de mesure (200) selon la revendication 4, **caractérisé en ce que** le canal de transmission (11) et la chambre de mobilité (11.1) sont remplis d'un liquide de transmission de pression.

6. Système de mesure (200) selon l'une quelconque des revendications 2 à 5, **caractérisé en ce que** la membrane de transmetteur de pression (9) et la membrane d'adaptateur (6) présentent une section transversale ondulée se recouvrant exactement.

7. Système de mesure (200) selon l'une quelconque des revendications 2 à 6, **caractérisé en ce que** l'adaptateur (5) et/ou le transmetteur de pression (7) présente(nt) un raccord de dépression (20, 21) pour l'évacuation d'une chambre intermédiaire formée dans l'état monté entre l'adaptateur (5) et le transmetteur de pression (7).

8. Système de mesure (200) selon la revendication 7, **caractérisé en ce qu'**il est prévu un appareil de mesure (13), qui est couplé au raccord de dépression (20, 21) pour la surveillance de la dépression.

9. Système de mesure (200) selon une revendication 7 ou 8, **caractérisé en ce qu'**il est prévu une soupape (70), qui est couplée au raccord de dépression (11).

10. Système de mesure (200) selon l'une quelconque des revendications 2 à 9, **caractérisé en ce que**
- le transmetteur de pression (7) et l'adaptateur (5) sont réalisés au moins en partie sous forme essentiellement cylindrique, dans lequel
- la partie cylindrique (7.1) du transmetteur de pression (7) est limitée sur un côté par la membrane de transmetteur de pression (9) et
- la partie cylindrique (5.3) de l'adaptateur (5) est limitée sur un côté par la membrane d'adaptateur (6),
- dans lequel le transmetteur de pression (7) pénètre avec sa partie cylindrique (7.1) avec la membrane de transmetteur de pression (9) en avant dans la partie cylindrique (5.3) de l'adaptateur (5).

11. Système de mesure (200) selon la revendication 10, **caractérisé en ce qu'**un diamètre extérieur (D1) de la partie essentiellement cylindrique (7.1) du transmetteur de pression (7) et un diamètre intérieur (D2) de la partie essentiellement cylindrique (5.3) de l'adaptateur (5) sont réalisés de telle manière que le transmetteur de pression (7) soit mobile sans jeu notable à l'intérieur de l'adaptateur (5).

12. Système de mesure (200) selon l'une quelconque des revendications 2 à 11, **caractérisé en ce que**, pour une fixation du transmetteur de pression (7) à l'adaptateur (5),
- l'adaptateur (5) présente un filet intérieur (51) ou un filet extérieur et le transmetteur de pression (7) présente un filet extérieur (50) ou un filet intérieur correspondant à celui-ci,
- l'adaptateur (5) et le transmetteur de pression (7) comprennent des structures de fixation (4, 80, 81, 83) pour la fixation d'au moins une attache (40, 41, 63, 64) ou d'une bague de serrage et/ou
- des alésages et/ou des filets se correspondant mutuellement pour un assemblage vissé (30, 34).

13. Système de mesure (200) selon l'une quelconque des revendications 10 à 12, **caractérisé en ce qu'**un diamètre extérieur (D1) de la partie essentiellement cylindrique (7.1) du transmetteur de pression (7) et/ou un diamètre intérieur (D2) de la partie essentiellement cylindrique (5.3) de l'adaptateur (5) vaut/valent 30 mm à 80 mm, 40 mm à 70 mm, en particulier 45 mm ou 55 mm.

14. Installation (100), comprenant
- une chambre de traitement (1), dans laquelle se trouve une substance à mesurer,
- un raccord de traitement (3) couplé à la chambre de traitement (1), et
- un système de mesure (200) selon l'une quelconque des revendications 2 à 13 couplé au raccord de traitement (3).

15. Installation (100) selon la revendication 14, **caractérisée en ce que** la membrane d'adaptateur (6) est disposée dans l'alignement d'une paroi (1.1) limitant la chambre de traitement (1).
